# EUROPÄISCHE PATENTANMELDUNG

(11) **EP 1 890 056 A1**
(43) Veröffentlichungstag der Anmeldung: **20.02.2008**
(21) Anmeldenummer: 06017091.7
(22) Anmeldetag: 16.08.2006
(51) Int. Cl.: F16J 15/32

(54) **Bürstendichtung für eine Strömungsmaschine**

(71) Anmelder: SIEMENS AKTIENGESELLSCHAFT, 80333 München (DE)
(72) Erfinder: Neef, Matthias, Dr., 45468 Mülheim an der Ruhr (DE); Sürken, Norbert, 45468 Mülheim an der Ruhr (DE); Urlichs, Karl, Dr., 90552 Röthenbach (DE)

(57) **Zusammenfassung**

Eine Bürstendichtung (10) für eine Strömungsmaschine, zum Abdichten eines Spaltes zwischen einem rotierenden und einem stehenden Bauteil (28) der Strömungsmaschine, bei der elastisch biegsame Borsten (12) mit einem Endbereich (14) in einem Grundkörper (16) gehalten sind, welcher an einem der Bauteile (28) ortsfest gehaltert ist, ist erfindungsgemäß dadurch gekennzeichnet, dass der Grundkörper (16) von einem Blech (20) an dem Bauteil (28) gehaltert ist, welches im Querschnitt betrachtet U-förmig gestaltet ist und von dem der Grundkörper (16) an zumindest zwei gegenüberliegenden Seitenflächen umgriffen ist.

## Beschreibung

Die Erfindung betrifft eine Bürstendichtung für eine Strömungsmaschine, zum Abdichten eines Spaltes zwischen einem rotierenden und einem stehenden Bauteil der Strömungsmaschine, bei der elastisch biegsame Borsten mit einem Endbereich in einem Grundkörper gehalten sind, welcher an einem der Bauteile ortsfest gehaltert ist.

Eine derartige Bürstendichtung ist aus EP 0 905 421 A1 bekannt. Bei der dort beschriebenen Ausführung sind die elastisch biegsamen Borsten mit einem Ende in einem in einem ersten der Bauteile einliegenden Grundkörper gehalten und liegen mit dem anderen Ende an einem anderen Bauteil dichtend an. Ferner liegen die Borsten in ihrer überwiegenden Längserstreckung an einem Führungsblech an, wobei sowohl der Grundkörper als auch das Führungsblech in einer Nut eines der Bauteile eingelegt sind. Sowohl der Grundkörper als auch das Führungsblech sind mittels eines in die Nut eingestemmten Drahtes in ihrer gegenseitigen Lage gehalten.

Die derartige sowie auch andere Befestigungen von Bürstendichtungen in Bauteilen von Strömungsmaschinen des Standes der Technik erfordern eine vergleichsweise aufwändige Sicherung mit zusätzlichen Befestigungselementen. Meist sind diese verbunden mit aufwändigen Fertigungs- und Montageverfahren, wie beispielsweise Schrauben, Schweißen, das Sichern von Teilfugen, das Ausbilden komplizierter Nutformen sowie Sonderausführungen für die erforderlichen Verstellprozesse. Erschwerend kommt ferner hinzu, dass die Bürstendichtung vorteilhaft stromauf und/oder stromabwärts durch Schutzbleche bzw. Schutzringe geschützt sein sollte. Diese Schutzbleche bzw. Schutzringe sind entweder integraler Bestandteil des eigentlichen Bürstenelements oder müssen als zusätzliche Konstruktionselemente mit eingebaut oder an den beteiligten Bauteilen selbst ausgebildet sein.

Es ist eine Aufgabe der Erfindung eine Bürstendichtung für eine Strömungsmaschine sowie eine Strömungsmaschine mit einer derartigen Bürstendichtung zu schaffen, bei der die oben genannten Nachteile überwunden sind. Die Bürstendichtung soll insbesondere kostengünstig herstellbar und montierbar sein, zugleich aber über ihre Lebensdauer die geforderte Dichtfunktion gewährleisten.

Die Aufgabe ist erfindungsgemäß mit einer Bürstendichtung für eine Strömungsmaschine gemäß Anspruch 1 und einer Strömungsmaschine gemäß Anspruch 4 gelöst. Vorteilhafte Weiterbildungen der Erfindung sind in den abhängigen Ansprüchen beschrieben.

Die erfindungsgemäße Bürstendichtung ist insbesondere für eine Strömungsmaschine vorgesehen und soll dort zum Abdichten eines Spaltes zwischen einem rotierenden und einem stehenden Bauteil der Strömungsmaschine dienen. Sie weist elastische biegsame Borsten auf, die mit einem Endbereich in einem Grundkörper gehalten sind. Der Grundkörper ist seinerseits an einem der Bauteile ortsfest gehaltert. Diese Halterung ist erfindungsgemäß derart gestaltet, dass der Grundkörper von einem Blech an dem Bauteil gehaltert, insbesondere reibschlüssig gehaltert ist, welches im Querschnitt betrachtet U-förmig gestaltet ist und von dem der Grundkörper an zumindest zwei gegenüber liegenden Seitenflächen umgriffen ist. Das derart erfindungsgemäß ausgestaltete U-förmige Blech umgreift also den Grundkörper insbesondere in einer kraftschlüssigen Pressung und hält ihn auf diese Weise innerhalb der U-Form zurück. Zugleich kann das derartige, kostengünstig herstellbare Blech in besonders einfacher Weise in eine an dem zugehörigen Bauteil ausgestaltete Nut eingeschoben werden. Bei diesem Einschiebevorgang kann im Zusammenwirken mit der Nut eine Presspassung erzeugt werden, mittels der das Blech zusammen mit dem darin angeordneten Grundkörper sicher und lagegenau an dem Bauteil ortsfest gehalten ist.

Erfindungemäß wird auf diese Weise die Funktion und Montage der Bürstendichtung auf ein notwendiges Minimum reduziert. Es muss lediglich ein Blech zusammen mit einem Grundkörper bzw. Bürsten-Kernelement in eine Nut, beispielsweise eine Gehäusenut, eingestemmt werden. Das Kernelement der Bürstendichtung übernimmt dabei die Funktion bisher bekannter Stemmdrähte.

Besonders bevorzugt ist bei der erfindungsgemäßen Bürstendichtung zumindest einer der Schenkel des U-förmigen Bleches im Querschnitt betrachtet derart lang gestaltet, dass er ein Führungsblech für die Borsten bildet. Auf diese Weise wird mit dem erfindungsgemäß eingestemmten Blech zugleich stromauf und/oder stromab von den Borsten der Bürstendichtung die Funktion bekannter Schutzringe übernommen.

Um diese Funktion eines Schutzringes bzw. Schutzbleches weiter zu verbessern, weist der genannte Schenkel bevorzugt eine Kröpfung bzw. Stufung auf, welche zu den benachbarten Borsten gerichtet ist. Die Kröpfung stellt sicher, dass die Borsten bei einer Belastung mit Druck, gegenüber dem die Bürstendichtung abdichten soll, dennoch im Wesentlichen ihre Längsrichtung und damit ihre Dichtfunktion beibehalten.

Bei der mit der erfindungsgemäßen Bürstendichtung versehenen Strömungsmaschine, ist die Bürstendichtung wie erwähnt bevorzugt mit ihrem U-förmigen Blech in eine die Bürstendichtung haltende Nut eingepresst.

Besonders bevorzugt ist die Nut im Querschnitt betrachtet im Wesentlichen rechteckig gestaltet. In einer derartigen rechteckigen Nut kann aufgrund der axialen Elastizität des erfindungsgemäßen Bleches sowie des darin angeordneten Grundkörpers eine dauerhaft stabile reibschlüssige Verklemmung hergestellt werden. Zugleich kann die Nut selbst sehr kostengünstig ausgebildet werden, da sie insbesondere keine Hinterschneidung aufweisen muss.

Schließlich ist hinsichtlich der erfindungsgemäßen Lösung noch anzumerken, dass diese auch sehr kostengünstig repariert und gewartet werden kann, da auch eine Demontage der erfindungsgemäßen Bürstendichtung einfach und kostengünstig möglich ist.

Nachfolgend werden Ausführungsbeispiele erfindungsgemäßer Strömungsmaschinen mit darin angeordneten Bürstendichtungen anhand der beigefügten schematischen Zeichnungen näher erläutert. Es zeigt:
Fig. 1 einen Längsschnitt eines ersten Ausführungsbeispiels einer erfindungsgemäßen Bürstendichtung während des Vorgangs ihrer Montage,
Fig. 2 einen Längsschnitt zweier Varianten eines Ausführungsbeispiels einer erfindungsgemäßen Bürstendichtung,
Fig. 3 einen Längsschnitt zweier Varianten eines weiteren Ausführungsbeispiels einer erfindungsgemäßen Bürstendichtung und
Fig. 4 ein weiteres Ausführungsbeispiel einer erfindungsgemäßen Bürstendichtung.

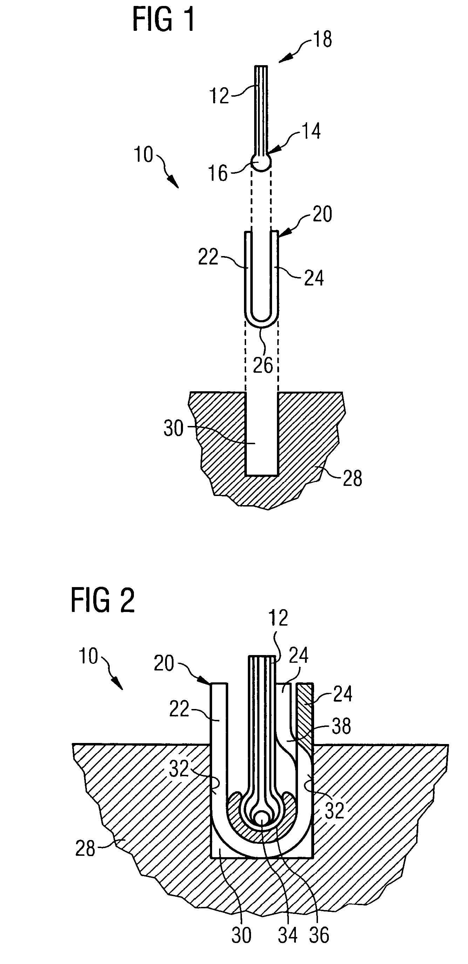

In Fig. 1 ist der Vorgang der Montage einer erfindungsgemäßen Bürstendichtung 10 veranschaulicht. Die Bürstendichtung 10 weist eine Vielzahl länglicher Borsten 12 auf, welche parallel zueinander in einem langen Band angeordnet sind. An einem Endbereich 14 sind die Borsten in einen schnurförmigen Grundkörper 16 eingesetzt und dort ortsfest gehalten. Die Borsten 12 sind insbesondere in diesen Grundkörper 16 eingeklebt, eingeschweißt, eingelötet oder eingegossen. Am entgegengesetzten Endbereich 18 sind die Borsten elastisch biegsam und dichten dort im eingebauten Zustand gegenüber einem in Fig. 1 nicht dargestellten Bauteil ab. An der Bürstendichtung 10 ist ferner ein im in Fig. 1 dargestellten Querschnitt betrachtet U-förmiges Blech 20 vorgesehen, zwischen dessen Schenkel 22 und 24 der Grundkörper 16 mit den darin befestigten Borsten 12 bis zu einem die Schenkel 22 und 24 verbindenden Mittelabschnitt 26 hinab eingesetzt ist. Der derart in das Blech 20 eingesetzte Grundkörper 16 wird zusammen mit den Borsten 12 nachfolgend in eine im Bauteil 28 ausgebildete und im Querschnitt betrachtet im Wesentlichen rechteckige Nut 30 eingeschoben. Dabei wird an den Seitenflächen 32 der Nut 30 im Zusammenwirken mit den Schenkeln 22 und 24 des Bleches 20 eine reibflüssige Verbindung hergestellt, die Schenkel 22 und 24 werden geringfügig nach innen verformt und dadurch wird zusätzlich der Grundkörper 16 im Inneren der U-Form des Bleches 20 geklemmt.

In Fig. 2 sind zwei Varianten eines Ausführungsbeispiels einer derart montierten Bürstendichtung 10 veranschaulicht, bei denen der Grundkörper 16 mittels eines Drahtes 34 gebildet ist, um den herum die Borsten 12 gelegt sind. Auf den derart mit Borsten 12 umgebenen Draht 34 ist nachfolgend eine im Querschnitt betrachtet einen Dreiviertelkreis überdeckende Schale 36 aufgeklemmt. Diese Schale 36 ist dann von dem im Querschnitt betrachtet U-förmigen Blech 20 umgeben.

Das Blech 20 weist dabei bei einer der Varianten zwei hinsichtlich ihrer Längserstreckung gerade Schenkel 22 und 24 auf, wobei bei der zweiten Variante einer der Schenkel, nämlich der Schenkel 24, mit einer Kröpfung 38 versehen ist, welche zu den benachbarten Borsten 12 hin gerichtet ist und an diesen derart anliegt, dass diese selbst unter Druckbelastung im Wesentlichen ihre gerade Grundform beibehalten.

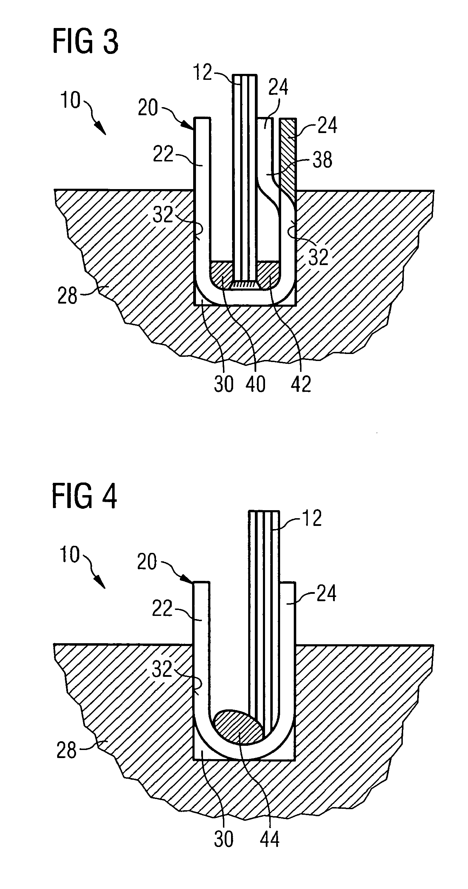

In Fig. 3 sind zwei Varianten eines weiteren Ausführungsbeispiels einer erfindungsgemäßen Bürstendichtung 10 veranschaulicht, bei denen der Grundkörper 16 aus zwei Stäben 40 und 42 gebildet ist, zwischen denen die Endbereiche 14 der Borsten 12 eingeklemmt oder eingeklebt sind. Bei einer der Varianten ist der Schenkel 24 wiederum im Querschnitt betrachtet gerade ausgebildet, während er bei der anderen Variante eine Kröpfung 38 aufweist.

In Fig. 4 ist schließlich ein Ausführungsbeispiel einer erfindungsgemäßen Bürstendichtung 10 dargestellt, bei dem der Grundkörper 16 durch einen an den Borsten 12 einseitig eingegossenen Wulst 44 gebildet ist. Der derartige Wulst 44 führt dazu, dass die Borsten 12 sich innerhalb des U-förmigen Bleches 12 und auch innerhalb der Nut 30 bereits an einer Seite befinden und dort im Wesentlichen mit ihrer gesamten Längserstreckung am Schenkel 24 anliegen, ohne dass dieser eine Kröpfung aufweisen müsste.

## Patentansprüche

1. Bürstendichtung (10) für eine Strömungsmaschine, zum Abdichten eines Spaltes zwischen einem rotierenden und einem stehenden Bauteil (28) der Strömungsmaschine, bei der elastisch biegsame Borsten (12) mit einem Endbereich (14) in einem Grundkörper (16) gehalten sind, welcher an einem der Bauteile (28) ortsfest gehaltert ist,
**dadurch gekennzeichnet, dass**
der Grundkörper (16) von einem Blech (20) an dem Bauteil (28) gehaltert ist, welches im Querschnitt betrachtet U-förmig gestaltet ist und von dem der Grundkörper (16) an zumindest zwei gegenüberliegenden Seitenflächen umgriffen ist.

2. Bürstendichtung nach Anspruch 1,
**dadurch gekennzeichnet, dass**
zumindest einer der Schenkel (22, 24) des U-förmigen Blechs (20) im Querschnitt betrachtet derart lang gestaltet ist, dass er ein Führungsblech für die Borsten (12) bildet.

3. Bürstendichtung nach Anspruch 2,
**dadurch gekennzeichnet, dass**
der Schenkel (22, 24) eine Kröpfung (38) aufweist, welche zu den benachbarten Borsten (12) gerichtet ist.

4. Strömungsmaschine mit einer Bürstendichtung (10) nach einem der Ansprüche 1 bis 3,

5. Strömungsmaschine nach Anspruch 4,
**dadurch gekennzeichnet, dass**
die Bürstendichtung (10) mit ihrem U-förmigen Blech (20) in eine die Bürstendichtung (10) haltende Nut (30) eingepresst ist.

6. Strömungsmaschine nach Anspruch 5,
**dadurch gekennzeichnet, dass**
die Nut (30) im Querschnitt betrachtet im Wesentlichen rechteckig gestaltet ist.
